# EUROPEAN PATENT APPLICATION

(11) **EP 0 529 989 A1**
(43) Date of publication of application: **03.03.1993**
(21) Application number: 92307698.8
(22) Date of filing: 24.08.1992
(51) Int. Cl.: A47B 31/02

(54) **Food dispensing system**

(30) Priority: 24.08.1991 GB 9118313
(71) Applicant: BURLODGE LIMITED, Kingston upon Thames, Surrey KT1 2SH (GB)
(72) Inventor: Speranza, Angelo, Wimbledon Common, London SW19 4UJ (GB)
(74) Representative: Rock, Olaf Colin

(57) **Abstract**

According to a first aspect of the present invention there is provided a food dispensing system involving the dispensing of food and / or utensils from a mobile source thereof to a specific location wherein a pair of unit trays (11, 11′), are adapted for demountable coupling with one another to provide an extended rigid duplex tray (14) for use at the specific location. The second aspect involves the provision of a containment (31) having two chambers (33, 34) each chamber having means for supporting a plurality of unit (11, 11′) or duplex (14) trays according to the first aspect so that the duplex trays or pairs of unconnected unit trays can be readily stored. At least one chamber (34) can be provided with apertures (40A, 40B) to enable air to be circulated along a path (H) within the chamber in which trays according to the first aspect are located.

## Description

This invention relates to the dispensing of food. It is particularly concerned with the dispensing of food in an establishment, such as a hospital, where food prepared in one place has to be transferred and dispensed on trays to relatively static individuals located in a number of places. To ensure that the food is effectively transferred a number of requirements must be met. The prepared food, whether hot or cold, needs to be moved from a kitchen or other food preparation area to the location of each consumer while being protected from contamination and deterioration and while being maintained within a predetermined temperature range. Once on location the food needs to be attractively and readily presented to a patient on a tray along with the necessary utensils. Once use of each tray has been completed the tray along with utensils, and any waste food, need to be readily recovered from each patient and returned to a service area or kitchen to enable the hardware to be cleaned for re-use and waste material disposed of.

Any dispensing system that is adopted should be dispenser friendly enabling food and utensils to be readily dispensed and recovered without the exercise of extensive and time consuming manual or technical skills. Typically nursing staff who frequently have to deal with the provision of meals should be able to use the system readily without significant intrusion into other more critical and specialised functions.

In one prior art device a food serving tray is known (UK Patent 1 486 939) incorporating heater elements to enable food to be maintained art a desired serving temperature. The tray comprises a planar support member of thermal insulating material having an upturned peripheral edge. The support member has at least one interruption closed and sealed by a plate or disc of heat conducting material. Each plate or disc is contacted on its underside by a heater housed in the tray which is powered by way of conductors also housed in the tray which conductors extend from the heater to the edge of the tray to an array of electrical contacts. A trolley fro housing the trays is equipped with a complementary array of contacts so that with the tray installed in the trolley the individual heaters in each tray are powered by way of the coupled array to maintain the heater in the tray at operating temperature.

A tray of this kind while being useful for heated food is not useful for unheated or chilled food. In addition the trays are elaborate units requiring use with a trolley having a complementary electrical supply and connecting system. Both the trays and their trolley require careful maintenance and cleaning.

In a second prior art device (US Patent 4966296) there is provided an integrated food tray incorporating a tray housing. The housing is in the form of a receptacle which is initially integrated but which contains at least two meal course portion containers which are separable. At least one separable portion is designed to carry a meal course which is to be heated in that portion, and at least one separable portion is not intended to be heated but rather is intended to carry a meal course which is to be served at room temperature or at a temperature cooler than room temperature.

The integrated tray described while providing for the selection, transfer and heating of the food does not actually facilitate the presentation of the prepared food to a consumer. For this purpose a further tray is required. Once used the separable portion containers become waste material and consequently the person serving the food has to gather up the used containers and deposit them into a waste carrier. As a result a considerable amount of waste material has to be provided for.

According to a first aspect of the present invention there is provided a food dispensing system involving the dispensing of food and/or utensils from a mobile source thereof to a specific location characterised by the provision of a pair of unit trays (11, 11′) demountably coupled to one another to provide an extended rigid duplex tray (14) for use at the specific location.

According to a first preferred version of the present first aspect of the present invention the unit trays (11, 11′) adapted for connected by couplings ()12, 13) to provide an extended rigid duplex tray (14) are each substantially square in plan Typically the duplex tray (14) is substantially rectangular in plan.

According to a second aspect of the present invention there is provided a food dispensing system characterised by the provision of a storage containment (31) having two chambers (33, 34); each chamber (33, 34) having means (37, 39) for supporting one or more unit trays (11, 11′) or duplex trays (14) according to the first aspect or the preferred version thereof.

According to a first preferred version of the second aspect of the present invention the horizontal cross-section (W) of each chamber (33, 34) is sufficient to accommodate one or more unit trays (11, 11′) or duplex trays (14) as claimed in any preceding claim.

According to a second preferred version of the second aspect of the present invention or the first preferred version thereof the containment (31) is equipped with wheels (32) to provide for mobile operation.

According to a third preferred version of the present invention or any preceding preferred version thereof the containment 31 is provided with apertures (40A, 40b) whereby air can be circulated within a chamber (34) along a path (H) incorporating any trays within the chamber (34).

An exemplary embodiment of the present invention will now be described with reference to the accompanying drawings of a food serving trolley of which:
Figure 1 is a perspective view of an uncoupled pair of unit trays;
Figure 2 is a perspective view showing the unit trays of Figure 1 when coupled to form a rigid duplex tray;
Figure 3 is a top view of a mobile food cabinet;
Figure 4 is a front elevation of the cabinet of Figure 3; and
Figure 5 is a side elevation in the direction of arrow V shown in Figure 4.

### Figures 1 and 2

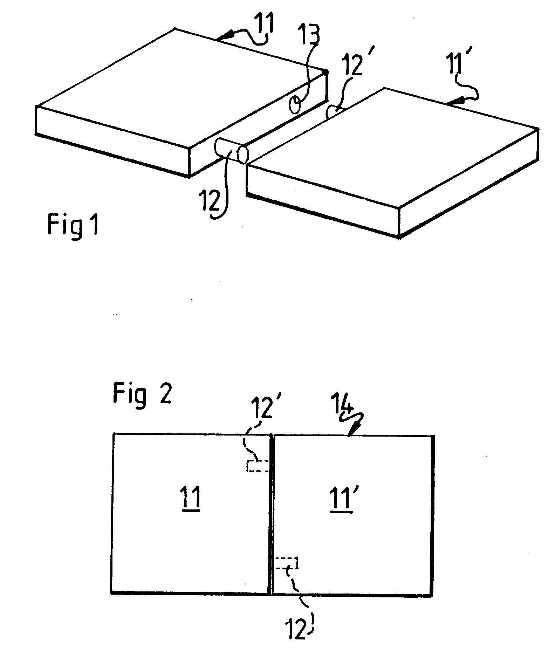

Unit tray 11 being identical to unit tray 11′ only tray 11 is hereafter described in detail the reference to the corresponding feature of tray 11′ being added in parentheses with a dash after the feature of tray 11. The unit tray 11 (11′) is fabricated from ABS plastics material and has cast integrally with it a peg 12 (12′) and a socket 13 (13′). The tray 11 is shown as being of slab like form. However it can be of any convenient shape as long as it has one edge capable of connection to a corresponding tray 11′. The peg and socket enable the trays 11, 11′ to be readily coupled as shown in Figure 2 to provide a single rigid duplex tray 14 which is used to provide a patient typically in a bed or a chair with a meal. The peg 12 and socket 13 are a simple coupling means. However any demountable coupling can be used, such as a tongue and groove joint with the tongue on one tray and the groove on the other, so long as the resulting duplex tray is rigid while in use.

The invention is not limited to a pair of unit trays each of identical plan so long as, when coupled, they form a duplex tray which provides a rigid self-supporting work surface for a user, especially an incapacitated one.

### Figures 3, 4 and 5

These variously show a mobile cabinet 31 mounted on castors 32 to enable the cabinet to be readily wheeled from a loading point to individual locations as will be described hereafter.

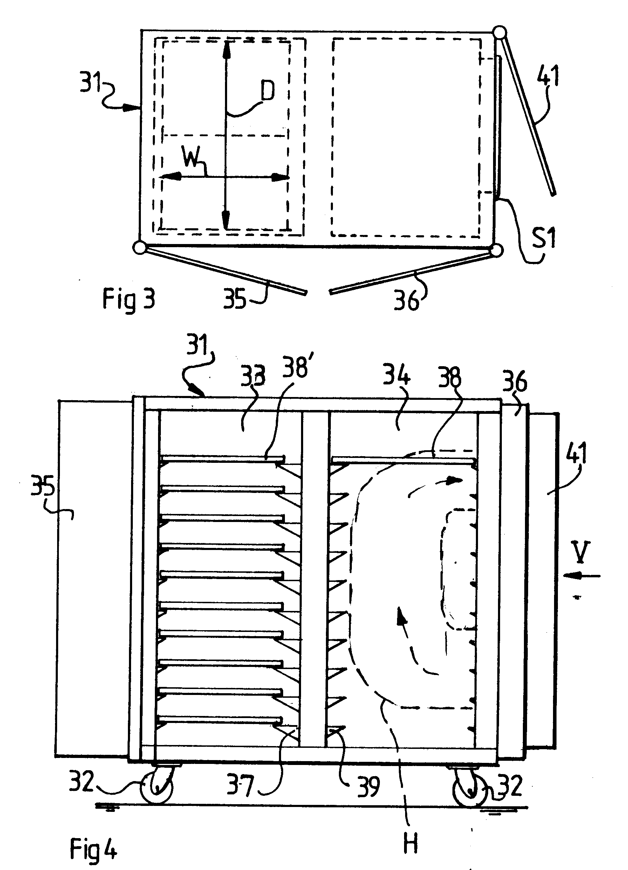

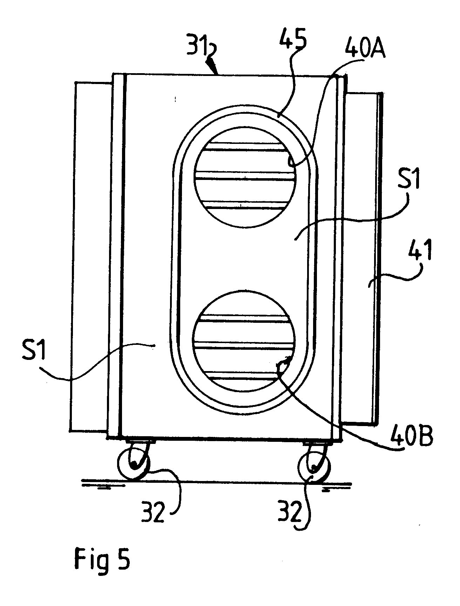

The cabinet 31 incorporates two open fronted chambers 33, 34 to which access is gained by way of, respectively, doors 35, 36 (shown almost closed in Figure 3 and open in Figure 5).

Chamber 33 (chamber 34 likewise) has an internal horizontal depth D and internal horizontal width W and is equipped with pairs of horizontal runners 37 on which can be slid and retained a pair of unit trays 38′ either separately like unit trays 11, 11′ described in connection with Figures 1 and 2 or coupled like duplex tray 14 in Figure 2.

Chamber 34 is likewise equipped with runners 39 corresponding to runners 37 in chamber 33. However chamber 34 is adapted to receive trays bearing food stuffs which need to be kept warm or hot or, in the case of a regenerative food service, need to be subjected to a steady flow of air at a predetermined temperature for a definite period. To this end the cabinet 31 is provided in side face S1 with upper and lower side apertures 40A, 40B (normally closed by door 41 shown nearly closed in Figure 3 and open in Figure 5). The apertures 40A, 40B provide for the cabinet 31 to be juxtaposed with corresponding side faces of a static cabinet to define when door 36 is closed a closed air flow path H extending through chamber 34 of the mobile cabinet 31 and the static cabinet. Within the static cabinet there is provided a fan and heating elements to enable heated air to be driven around the path H in chamber 34. Each tray, such as tray 38, within chamber 34 serves as a baffle deflecting heated air over material contained on the tray.

The static cabinet contains a control unit incorporating a number of programs which can be readily selected by a user to obtain the correct heating profile for a given type and amount of food stuff in chamber 34.

Chamber 33 in this case serves to retain trays with food stuffs and related items such as cutlery, cups and glasses at room temperature. However in an alternative embodiment the chamber 33 can be adapted for a cooling flow of air to be circulated through it in order to maintain food stuffs such as a salads and ice cream at a correct serving temperature below ambient. A static cabinet provides a refrigerating device and circulating fan to enable cool air to be circulated around a closed cooling path within the chamber 33 after the manner of the hot air around path H in chamber 34 by a static cabinet.

In any event the mobile cabinet 31 incorporates in its structure suitable insulating and sealing materials to ensure that the various parts of the cabinet 31 can readily maintain the necessary temperature levels and differentials. In particular the cabinet 31 in the vicinity of the aperture 40A, 40B is provided with a continuous seal 45 so that when the cabinet 31 is juxtaposed with a static cabinet an enclosed flow path is provided between the interior of the static and the mobile cabinets.

The mobile cabinet 31 containing, as it does, only trays can be kept to a relatively small size, needs no power supply cables and can be readily manoeuvred in a small ward. It is mechanically uncomplicated and readily accessed for cleaning maintenance and repairs.

By keeping the heating, and cooling, sources to a separate static cabinet one static cabinet can be used to serve a number of mobile cabinets similar to cabinet 31. Since the static cabinet, unlike the mobile one, contains no perishable material there is no need for frequent cleaning. Power supplies are readily and safely provided to a static, as distinct from a mobile, cabinet. In addition the operating units within the static cabinet can be readily serviced.

To use the system the mobile cabinet 31 is loaded by opening doors 35, 36 and placing unit tray 38, carrying preheated food on separate trays in chamber 34 (two to a shelf) and separate unit trays 38′ carrying eating utensils and room temperature food in chamber 33 (also two to a shelf). Doors 35, 36 are then closed to isolate the food within the cabinet.

The loaded cabinet 31 is then transferred to the location where food is to be dispensed and having opened door 41 the cabinet 31 is juxtaposed with an appropriate static cabinet. A suitable heating program is then selected to maintain a flow of hot air for a predetermined period along flow path H to ensure that the food in chamber 34 is maintained at a predetermined mean temperature. At the end of the warming period the cabinet 31 is then detached from the static cabinet and wheeled to the first location where food is to be dispensed.

Doors 35, 36 are opened and one unit tray 38 taken from (hot) chamber 34 and one unit tray 38′ from (cold) chamber 33. The trays 38, 38′ are then plugged together as shown in Figure 2 to provide a single rigid duplex tray which is then supplied to the first recipient.

This serving process is repeated until all the required trays of food have been dispensed.

When the used duplex trays, utensils and waste material are to be collected the mobile cabinet is again moved to the start of its route and the duplex trays are in turn recovered and pushed into either of the chamber 33, 34 (it will be recalled that each chamber has a cross section twice the size of a single tray) without separating the duplex tray into its separate unit trays. Once all trays have been recovered the loaded cabinet 31 is then moved to a service location. There the trays along with the used plates and utensils to be washed for re-use and the duplex trays uncoupled into separate unit trays. The interior of the cabinet is cleaned and then recharged with pairs of separate unit trays as before to enable the operating cycle to be being repeated.

The cabinet 31 can also be used for regenerative heating where the 'hot' chamber 34 is charged with trays bearing chilled pre-cooked food. The mobile cabinet is again juxtaposed with the static cabinet and the controller operated to select a regeneration program in which the heater is operated to warm the food on the trays from a chilled to a correctly heated condition after a pre-determined period. The food is dispensed as before.

It will be apparent that the invention is also applicable to other types of cabinet including those with built in heating (and/or cooling) systems so providing a self contained cabinet system which once loaded with food merely requires a power supply to keep the food at the appropriate temperature or, in the case of a regenerative system, ensure that the food is raised to the correct temperature at the required rate.

The assembly of a duplex tray from a pair of unit trays of plastics material one supporting 'hot' and the other 'cold' food provides a number of advantages including low initial cost, minimum size of cabinet, easy handling by the server and ready cleaning.

## Claims

1. A food dispensing system involving the dispensing of food and/or utensils from a mobile source thereof to a specific location characterised by the provision of a pair of unit trays (11, 11′) demountably coupled to one another to provide an extended rigid duplex tray (14) for use at the specific location.

2. A food dispensing system as claimed in Claim 1 characterised in that unit trays (11, 11′) adapted for connected by couplings ()12, 13) to provide an extended rigid duplex tray (14) are each substantially square in plan.

3. A food dispensing system as claimed in Claim 1 or Claim 2 characterised in that the duplex tray (14) is substantially rectangular in plan.

4. A food dispensing system characterised by the provision of a storage containment (31) having two chambers (33, 34); each chamber (33, 34) having means (37, 39) for supporting one or more unit trays (11, 11′) or duplex trays (14) as claimed in any preceding claim.

5. A food dispensing system as claimed in Claim 4 characterised in that horizontal cross-section (W) of each chamber (33, 34) is sufficient to accommodate one or more unit trays (11, 11′) or duplex trays (14) as claimed in any preceding claim.

6. A food dispensing system as claimed in Claim 4 or Claim 5 characterised in that the containment (31) is equipped with wheels (32) to provide for mobile operation.

7. A food dispensing system as claimed in Claim 4,5 or 6 characterised in that the containment 31 is provided with apertures (40A, 40b) whereby air can be circulated within a chamber (34) along a path (H) incorporating any trays within the chamber (34).
